## Europäisches Patentamt

## European Patent Office

## Office européen des brevets

(11) Veröffentlichungsnummer: **0 211 912**
**B1**

(12) **EUROPÄISCHE PATENTSCHRIFT**

(45) Veröffentlichungstag der Patentschrift: **12.09.90**

(51) Int. Cl.⁵: **G 11 B 7/09**

(21) Anmeldenummer: **86901367.2**

(22) Anmeldetag: **24.01.86**

(86) Internationale Anmeldenummer:
**PCT/EP86/00029**

(87) Internationale Veröffentlichungsnummer:
**WO 86/04721 14.08.86 Gazette 86/18**

(54) **FOKUS-REGELUNG FÜR EIN GERÄT FÜR PLATTENFÖRMIGE, ROTIERENDE INFORMATIONSTRÄGER.**

(30) Priorität: **06.02.85 DE 3503983**

(43) Veröffentlichungstag der Anmeldung:
**04.03.87 Patentblatt 87/10**

(45) Bekanntmachung des Hinweises auf die
Patenterteilung:
**12.09.90 Patentblatt 90/37**

(84) Benannte Vertragsstaaten:
**AT BE CH DE FR GB IT LI LU NL SE**

(56) Entgegenhaltungen:
**EP-A-0 095 766**
**EP-A-00 935 82**
**EP-A-01 177 15**
**GB-A-21 342 89**

**Patent Abstract of Japan, Band 8, nr 65
(P-263)(1502) 27 März 1984 & JP A 58212633
Patent Abstract of Japan, Band 9, nr 186
(P-377)(1909) 2 August 1985 & JP A 6055520**

(73) Patentinhaber: **Deutsche Thomson-Brandt GmbH
Hermann-Schwer-Strasse 3 Postfach 1307
D-7730 Villingen-Schwenningen (DE)**

(72) Erfinder: **BAAS, Dieter
Sofienstrasse 10
D-7640 Kehl (DE)**
Erfinder: **KURZ, Arthur
Terra-Wohnpark 9
D-7730 VS-Marbach (DE)**

Courier Press, Leamington Spa, England.

**Beschreibung**

Die Erfindung betrifft ein Fokus-Regelsystem nach dem Oberbegriff des Anspruchs.

Es ist bekannt, daß bei Abtastung von CD-Platten Abtaststörungen, wie Dropouts, Black Dots, Fingerabdrücke oder Kratzer auf der Oberfläche der Platten, durch die Fehler-Korrektur oder-Interpolation in Verbindung mit der Technik der Servokreise korrigiert oder unterdrückt werden, so daß die Wiedergabe für den Zuhörer nicht oder kaum feststallbar beeinträchtigt wird. Selbstverständlich gilt dies nur bis zu bestimmten Grenzen. So ist es z.B. denkbar, daß Strörungen, wie etwa entsprechende Kratzer (z.B. Dropouts, Black Dots, Fingerabdrücke) auf der Oberfläche der Abtastseite der Platte, bei der Abtastung die Fokusnachregelung so beeinflussen, daß kurzzeitig ein Zustand des "Out-of-focus" eintritt. Das bedeutet, daß für eine bestimmte Zeitdauer wegen der Fehlerart und -dauer sowie -häufigkeit keine Fokussierung erreicht wird.

Hierdurch wird die Abtastung derart beeinflußt, daß eine Unterbrechung in der Wiedergabe störend hörbar wird.

Aus der EP—A—0095766 ist ein Regelsystem für Abspielgeräte für CD-Platten bekannt, das auch zur Fokusregelung verwendbar ist. Hierbei wird der Regelkreis dahingehend beeinflußt, daß bei großer Fehlerhäufigkeit die Regelkreisverstärkung klein und bei kleiner Fehlerhäufigkeit groß ist. Das hier benutzte System erwendet in einem Mikrocomputer unter anderem einen Zeitgeber, dessen Torzeit länger als eine Umdrehung der abzutastenden CD-Platten ist. Hier wird ein von der Umdrehungszahl unabhängiges, starres Zeitfenster verwendet. Auf diese Weise werden bestimmte Fehlerarten unterschiedlich bewertet, auch abhängig davon, ob die Fehler innen oder außen auf der CD-Platte auftreten. Die Regelkreisverstärkung wird für jede Platte eingestellt und bleibt konstant für die Abtastung. Auf diese Weise arbeitende Regelsystem sind sowohl bei Spurwie auch bei Fokus-Regelung nachteilig, da sie die auftretenden Fehler nicht ausregeln können, d.h. Störungen, die als Folge auftreten, bleiben hörbar.

Bei der Fokusnachregelung handelt es sich um einen geschlossenen Servokreis und zwar mit verhältnismäßig hoher Schleifenverstärkung, um eine genügend starke Kopplung zwischen Platte und Fokus-Aktuator auch bei möglichen Beschleunigungsamplituden, die auf die Platte oder das Abtastsystem durch z.B. Stoß gelangen können, zu gewährleisten.

Bei dieser Fehlerart und -dauer ist eine hohe Verstärkung und damit starke Kopplung jedoch nicht vorteilhaft, die Kopplung ist für diesen Fall zu stark.

Der Erfindung lag deshalb die Aufgabe zugrunde, den Servokreis für die Fokus-Regelung derart zu verbessern, daß eine Stabilisierung für die vorkommenden Fehlerarten erreicht wird.

Die Lösung dieser Aufgabe ergibt sich erfindungsgemäß aus dem Anspruch.

Weitere Einzelheiten und Weiterbildungen der Erfindung sind der Beschreibung eines Ausführungsbeispieles zu entnehmen.

Erfindungsgemäß ist ein Fokus-Regelsystem so ausgestattet, daß am Abtasterausgang des optischen Abtasters ein Signal zur Verfügung steht, das ein Datensignal und ein Servosignal enthält. Ersteres wird der Datenverarbeitung zugeführt. Letzteres steht den Regelkreisen zur Verfügung, indem hier bewirkt wird, daß in Abhängigkeit von der Art und Häufigkeit von Fehlern des Informationsträgers die Fokusverstärkung so beeinflußt wird, daß die Fokuskopplung für geringe Fehlerhäufigkeit hoch ist und für hohe Fehlerhäufigkeit gering ist. Eine optimale Datenausbeute wird erreicht, indem durch Mittel zur Detektion und Zählung die Fehlerart, -dauer und -häufigkeit digital erfaßt wird für bestimmte, ausgewählte Zeiträume und so nach D/A-Wandlung ein entsprechendes, sich automatisch ständig anpassendes Steuersignal für die Verstärkung des Servoverstärkers erzeugt wird.

Nachfolgend wird die Erfindung an hand der Zeichnung erläutert. Diese zeigt in

Figur 1 ein Blockschaltbild eines Ausführungsbeispiels des Fokus-Regelsystems;

Figur 2 graphische Darstellung der verschiedenen Signale an den Stufen der die Verstärkung des Fokusregelkreises beeinflussenden Schaltung.

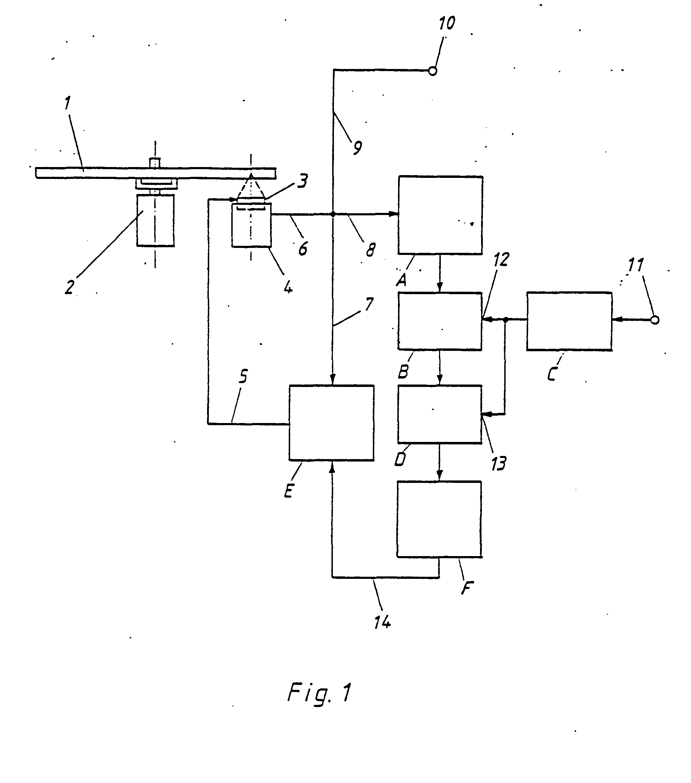

Figur 1 läßt eine von unten optisch abgetastete Informationsplattte 1 erkennen, die vom Motor 2 angetrieben wird. Der optische Abtaster 4 besitzt einen Fokus-Aktuator 3, der es ermöglicht, einen Laserlichtstrahl exakt auf der reflektierenden Schicht der Platte 1 zu fokussieren.

Während des Abtastens steht am Ausgang 6, des Abtasters 4 ein zusammengesetztes Signal zur Verfühung, das ein Datensignal, beispielsweise EFM-HF (eight to fourteen-modulation), und ein Servosignal enthält. Ersteres wird über eine Leitung 9 an den Anschlußpunkt 10 geleitet, an den die nicht gezeigte Datenverarbeitung angeschlossen ist.

Das Servosignal hingegen wird über die Leitung 8 einem Schwellwert-Detektor A zugeführt, dessen Ausgang an einen Zähler B angeschlossen ist, der von einem Torzeitgeber C gesetzt wird über den Anschluß 12. Der Torzeitgeber C erhält vom Anschluß 11 der momentanen Umdrehungszahl der Platte entsprechende Impulse. So ist die von ihm abgegebene Torzeit variabel in Anhängigkeit von der momentanen Umdrehungszahl der Platte. Diese Torzeit wird über den Eingang 13 ebenfalls einer Latch-Schaltung D eingegeben, die am Ausgang des Zählers B angeschlossen ist. Dem nachfolgenden D/A-Wandler F wird von der latch-Schaltung D ein digitales Signal abgegeben. Über die Ausgangsleitung 14 des D/A-Wandlers F wird ein entsprechendes analoges Signal als Steuergröße für die Verstärkung an den Fokus-Servo-Verstärker E geleitet. Hierdurch wird die Schleifenverstärkung ständig in Abhängigkeit von der Fehlerart und -häufigkeit beeinflußt. Über die Leitung 7 erhält der Fokus-Servo-Verstärker E das variabel zu verstärkende Servo-Signal, das er über die Leitung 5 dem Fokus-Aktuator 3 zuleitet. Dieser weist einen Wandler auf, der von diesem Signal angetrieben dafür sorgt, daß durch eine entsprechende achsiale Bewegung eines optischen Bauteiles, meist eine Sammellinse, die gewünschte Fokussierung stattfindet.

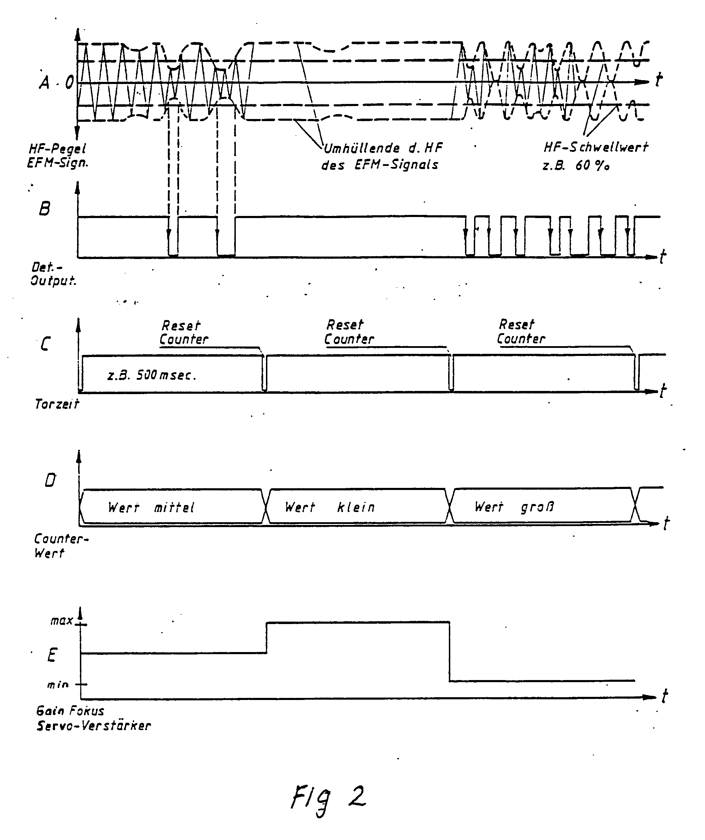

Figur 2 läßt erkennen, wie das EFM-HF-Signal im Schwellwert-Detektor A verarbeitet wird zu einem Ausgangssignal, daß dem Zähler B zugeleitet wird, der vom Torzeitgeber C gesetzt ein Ausgangssignal an die Latch-Schaltung D abgibt. Diese gelangt nach D/A-Wandlung zum Fokus-Servo-Verstärker E als Steuergröße für dessen momentane Verstärkung.

Mit der Eingabe einer von der momentanen Drehzahl abhängigen Torzeit wird der Vorteil erreicht, daß die Meßzeit immer gleich einer Plattenumdrehung ist und somit mit jedem Umlauf ein neuer Meßwert zur Verfügung steht. Die Anzahl der Fehler pro Meßfenster und Umdrehung ist somit konstant und von der Position des Abtasters auf der Platte (das ist der radiale Abstand vom Mittelpunkt) unabhängig.

Statt der Verwendung eines Torzeitgebers zum Setzen des Zählers ist es auch möglich, eine Eingabe mit auf konstante Werte einstellbaren Drehzahlen vorzusehen. Diese beispielhafte Variante des gezeigten Ausführungsbeispiels ist nicht als gesonderte Blockschaltbildfigur gezeigt, da sie bis auf den genannten Unterschied übereinstimmt.

Mit einer solchen Anordnung läßt sich die günstigste Lösung des Fokus-Regelsystems sowohl hinsichtlich der Stabilität der Abtastung gegenüber Plattenfehlern als auch jeweils optimaler Kopplung zwischen Platte und Fokus-Aktuator bei evtl. auftretenden Beschleunigungsamplituden erreichen.

Die beschriebene Anordnung ist insbesondere von Bedeutung, wenn CD-Platten bei häufigem Gebrauch in zunehmenden Maße Beschädigungen an der Oberfläche aufweisen.

**Patentanspruch**

Fokus-Regelsystem für ein Gerät für plattenförmige, rotierende Informationsträger (1), die berührungslos optisch abgetastet werden, mit einem einen Wandler enthaltenden Fokus-Aktuator (3), der von einem Fokus-Servo-Verstärker (E) mit variabeler Verstärkung gesteuert wird, wobei am Ausgang eines den Fokus-Aktuator (3) enthaltenden optischen Abtasters (4) ein zusammengesetztes Signal (6) zur Verfügung steht, das ein Servosignal (7) enthält, das einem den Fokus-Servo-Verstärker (E) enthaltenden Regelkreise zugeführt wird, und wobei das zusammengesetzte Signal (6) auch einem Fehlerdetektor (A) zugeführt wird, dessen Ausgang mit einem Zähler (B) verbunden ist, der die Abtastfehler innerhalb einer vorbestimmten Torzeit zählt und dessen Ausgangssignal die Verstärkung des Fokus-Servo-Verstärkers (E) über einen D/A Wandler (F) derart verändert, daß die Verstärkung für geringe Fehlerhäufigkeit hoch ist und für hohe Fehlerhäufigkeit gering ist, dadurch gekennzeichnet, daß die Torzeit von einem Torzeitgeber (C) variabel in Abhängigkeit von der momentanen Umdrehungzahl der Platte (1) geliefert wird, wobei der Zähler (B) die Verstärkung abhängig von der Fehlerhäufigkeit pro Plattenumdrehung regelt.

**Revendication**

Système de régulation focale pour un appareil utilisant des supports d'information (1) en forme de disques mobiles en rotation, dont la détection est effectuée sans contact par des moyens optiques, comprenant un dispositif de commande de focalisation (3) avec un convertisseur, qui est commandé par un amplificateur d'asservissement de focalisation (E) à amplification variable, le detecteur optique (4) qui comprend le dispositif de commande de focalisation (3), délivrant à sa sortie un signal composé (6) comprenant un signal d'asservissement (7) qui est envoyé vers un circuit de régulation contenant l'amplificateur de commande de focalisation (E), et le signal composé (6) étant également envoyé vers un detecteur d'erreurs (A) dont la sortie est reliée avec un compteur (B) comptant les erreurs détectées pendant une duree de porte déterminée et dont le signal de sortie modifie l'amplification de l'amplificateur de commande de focalisation (E) par un convertisseur numerique/analogique (F) da manière que l'amplification est élevée pour une faible fréquence d'erreurs et faible pour une fréquence d'erreurs elevée, caractérisé en ce qu'un générateur de signaux d'horloge (C) délivre une durée de porte variable en fonction du nombre de révolutions momentane du disque (1), le compteur (B) reglant l'amplification en fonction de la fréquence d'erreurs pour chaque révolution du disque.

**Claim**

A focus control system for a device for rotating information carriers (1) in the form of discs which are scanned optically without contact, having a focus actuator (3) which contains a transducer and which is controlled by a focus servo-amplifier (E) with variable gain, wherein a composite signal (6) is available at the output of an optical scanner (4) containing the focus actuator (3), which signal includes a servo signal (7) which is fed to a control loop containing the focus servo-amplifier (E), and wherein the composite signal (6) is also fed to a defect detector (A), the output of which is connected to a counter (B) which counts the scanning defects within a predetermined gate time and the output signal of which varies the gain of the focus servo-amplifier (E) via a D/A converter (F) in such a manner that the gain is high for a low defect rate and low for a high defect rate, characterised in that the gate time is variably supplied by a gate time generator (C) depending on the instantaneous number of revolutions per minute of the disc (1), while the counter (B) controls the gain depending on the defect rate per revolution of the disc.

Fig. 1

A · 0

HF-Pegel
EFM-Sign.

Umhüllende d. HF
des EFM-Signals

HF-Schwellwert
z.B. 60%

B

Def.-
Output.

C

Reset
Counter

Reset
Counter

Reset
Counter

z.B. 500 msec.

Torzeit

D

Wert mittel

Wert klein

Wert groß

Counter-
Wert

max

E

min

Gain Fokus
Servo-Verstärker

Fig 2

2